# EUROPÄISCHE PATENTSCHRIFT

(11) **EP 2 284 208 B1**
(45) Veröffentlichungstag und Bekanntmachung des Hinweises auf die Patenterteilung: **22.02.2012**
(21) Anmeldenummer: 10007806.2
(22) Anmeldetag: 27.07.2010
(51) Int. Cl.: C08G 63/692, C08L 67/06, C08L 75/04, C08K 5/5313

(54) **Phosphorhaltiges Flammschutzmittel**
Flame-retardant material containing phosphorous
Moyen de protection contre les flammes contenant du phosphore

(30) Priorität: 14.08.2009 DE 102009037631
(43) Veröffentlichungstag der Anmeldung: 16.02.2011
(73) Patentinhaber: Schill + Seilacher "Struktol" GmbH, 22113 Hamburg (DE)
(72) Erfinder: Just, Berthold Dr., 22397 Hamburg (DE); Keller, Holger Dr., 21391 Reppenstedt (DE); Imeri, Seljam, 22117 Hamburg (DE)
(74) Vertreter: Prinz & Partner

(56) Entgegenhaltungen:
- EP-A1- 1 238 997
- EP-A2- 1 710 264
- WO-A1-2005/005512
- DATABASE WPI Week 200563 Thomson Scientific, London, GB; AN 2005-618230 XP002608450, -& WO 2005/063922 A1 (TAKEMOTO YUSHI KK) 14. Juli 2005 (2005-07-14)

## Beschreibung

Die Erfindung betrifft ein phosphorhaltiges Flammschutzmittel und dessen Verwendung in härtbaren Kunstharzen und polymerisierbaren Zusammensetzungen.

Insbesondere betrifft die Erfindung flammhemmend ausgerüstete Formmassen aus thermoplastischen Polymeren sowie härtbare ungesättigte Polyesterharze und Epoxidharze, die das Flammschutzmittel enthalten, und die daraus hergestellten flammfesten Formkörper, einschließlich Folien, Filmen, Fasern, Fäden, Laminaten und Beschichtungen.

Die für viele Verwendungszwecke vorgeschriebene Flammfestmachung von Kunstharzen wie ungesättigten Polyesterharzen (UP-Harze) und Epoxidharzen wurde ursprünglich durch Einarbeitung von herkömmlichen Flammschutzmitteln wie zum Beispiel Antimontrioxid (Sb₂O₃) oder hochbromierten bzw. hochchlorierten organischen Verbindungen in die Kunstharze erreicht. Beispiele für solche hochbromierten bzw. hochchlorierten organischen Verbindungen sind Tetrabromphthalsäure, Dibromneopentylglykol und 1,4,5,6,7,7-Hexachlor-5-norbornen-2,3-dicarbonsäure, die auch als HET-Säure oder Chlorendic acid bezeichnet wird. Daneben werden auch Addukte aus Acryl- bzw. Methacrylsäure und dem Diglycidylether von Tetrabrombisphenol A verwendet. Abgesehen von toxikologischen Risiken führt die Verwendung solcher traditioneller Flammschutzmittel zu einer dramatischen Änderung der mechanischen und physikalischen Eigenschaften der damit ausgerüsteten Kunstharze.

Es ist deshalb schon lange bekannt, halogenfreie Flammschutzmittel wie Aluminiumtrihydroxid, Magnesiumhydroxid, Ammoniumpolyphosphat, verkapselten roten Phosphor und das sowohl Phosphor als auch Stickstoff enthaltende Melaminpolyphosphat zu verwenden. Diese müssen jedoch oft in Kombination mit Blähgraphit als Synergisten eingesetzt werden. Nachteilig an den genannten halogenfreien additiven Flammschutzmitteln ist jedoch, dass sie hochschmelzende Feststoffe sind, die weder in ausreichendem Maße in den härtbaren Kunstharzen gelöst noch eingemischt werden können.

Eine Verwendung des für andere Kunststoffe als Flammschutzmittel bekannten 9,10-Dihydro-9-oxa-10-phospha-phenanthren-10-oxid (DOPO) führt bei ungesättigten Polyesterharzen zu einer Verschlechterung der mechanischen Eigenschaften. Der Grund dafür liegt darin, daß DOPO als ein Radikalfänger wirken kann und damit der gewünschte Vernetzungsgrad der UP-Harze nicht erreicht wird.

Aus der DE 26 46 218 A1 sind phosphorhaltige Flammschutzmittel bekannt, die durch Addition von DOPO an eine ungesättigte Verbindung mit wenigstens einer esterbildenden funktionellen Gruppe und weitere Umsetzung mit einer esterbildenden Verbindung erhalten werden, die aus Dicarbonsäuren oder esterbildenden Derivaten davon, Diolen oder esterbildenden Derivaten davon sowie Oxycarbonsäuren oder esterbildenden Derivaten davon ausgewählt sind. Diese phosphorhaltigen Flammschutzmittel werden dann mit Dicarbonsäuren wie Terephthalsäure und einem Glykol zu flammfesten Polyestern umgesetzt.

Die DE 103 30 774 A1 beschreibt flammhemmend modifizierte, phosphorhaltige Copolyester, die durch Polykondensation der bei der Veresterung mindestens einer Dicarbonsäure mit mindestens einem Diol in Gegenwart einer flammhemmenden bifunktionellen Additionsverbindung von DOPO an eine ungesättigte Dicarbonsäure, wie beispielsweise Itaconsäure, und mindestens einer weiteren davon verschiedenen bifunktionellen phosphorhaltigen Verbindung entstehenden Produkte erhältlich sind. Als weitere bifunktionelle phosphorhaltige Verbindung ist unter anderem 2-Methyl-2,5-dioxo-1-oxa-2-phospholan genannt. Bevorzugt werden glykolisierte Derivate des beschriebenen Oxaphospholans eingesetzt. Die so erhaltenen phosphorhaltigen Copolyester werden in Form von Masterbatchgranulaten zu herkömmlichen Polyesterschmelzen zugemischt.

Die bekannten phosphormodifizierten Polyester sind jedoch überlicherweise feste oder hochviskose Massen, die schlecht löslich sind oder zur weiteren Verarbeitung in lösungsmittelfreien Systemen hoch aufgeheizt werden müssen. Es besteht daher weiter Bedarf an alternativen halogenfreien Flammschutzmitteln, die nicht toxisch sind und sich gut verarbeiten lassen, und die insbesondere als reaktive Flammschutzmittel in polymerisierbaren Zusammensetzungen und härtbaren Kunstharzen eingesetzt werden können.

Die Erfindung stellt dazu ein phosphorhaltiges Flammschutzmittel bereit, das erhältlich ist durch
i) Umsetzung einer aus DOPO oder kernsubstituierten DOPO-Derivaten ausgewählten Phosphorverbindung mit einer ungesättigten Dicarbonsäure oder deren Anhydrid in Gegenwart eines mehrwertigen Alkohols unter Bildung eines Hydroxylgruppen enthaltenden phosphorhaltigen Diesters;
ii) Weitere Umsetzung wenigstens eines Teils der Hydroxylgruppen mit einer bifunktionellen Phosphorverbindung aus der Gruppe der carboxylgruppenhaltigen Phosphinsäuren, deren Anhydride und Carbonsäureester, der Dicarbonsäurehalbester von Polyalkylenglykolphosphonaten und Polyalkylenglykolphosphaten und deren Mischungen;
iii) Umsetzung der in Schritt ii) nicht umgesetzten Hydroxylgruppen mit einer weiteren ungesättigten Dicarbonsäure oder deren Anhydrid; und
iv) Umsetzung des in Schritt iii) erhaltenen Reaktionsprodukts mit einer gesättigten oder ungesättigten aliphatischen Oxiranverbindung.

Im Vergleich zu den bisher bekannten, auf DOPO und/oder Oxaphospholan basierenden Polyestern weist der phosphormodifizierte Polyester gemäß der Erfindung eine niedrige Viskosität auf und lässt sich deshalb leichter verarbeiten. Außerdem ist die Löslichkeit in den üblichen industriellen Lösungsmitteln, Reaktivverdünnern und/oder Monomergemischen verbessert. Mit härtbaren Kunstharzen bildet das erfindungsgemäße Flammschutzmittel homogene und transparente Zusammensetzungen, die leicht zu verarbeiten sind. Der Phosphorgehalt des erfindungsgemäßen Flammschutzmittels ist so hoch, dass für einen wirksamen Flammschutz nur geringe Mengen des Flammschutzmittels eingesetzt werden müssen. Über die in dem phosphormodifizierten Flammschutzmittel noch vorhandenen reaktiven Gruppen, wie ungesättigte Kohlenstoff-Kohlenstoff-Doppelbindungen, ist eine sichere und dauerhafte Anbindung an die Polymermatrix gewährleistet.

Die mit dem erfindungsgemäßen Flammschutzmittel flammhemmend ausgerüsteten Polymere und gehärteten Kunstharze erfüllen im allgemeinen die Brandschutznorm UL 94 V-0 der Underwriters' Laboratories (USA).

Gegenstand der Erfindung ist ferner ein Verfahren zur Herstellung eines phosphorhaltigen Flammschutzmittels, welches die folgenden Schritte umfasst:
i) Umsetzung einer aus DOPO oder kernsubstituierten DOPO-Derivaten ausgewählten Phosphorverbindung mit einer ungesättigten Dicarbonsäure oder deren Anhydrid in Gegenwart eines mehrwertigen Alkohols unter Bildung eines Hydroxylgruppen enthaltenden phosphorhaltigen Diesters;
ii) Weitere Umsetzung wenigstens eines Teils der Hydroxylgruppen mit einer bifunktionellen Phosphorverbindung aus der Gruppe der carboxylgruppenhaltigen Phosphinsäuren, deren Anhydride und Carbonsäureester, der Dicarbonsäurehalbester von Polyalkylenglykolphosphonaten und Polyalkylenglykolphosphaten und deren Mischungen;
iii) Umsetzung der in Schritt ii) nicht umgesetzten Hydroxylgruppen mit einer weiteren ungesättigten Dicarbonsäure oder deren Anhydrid; und
iv) Umsetzung des in Schritt iii) erhaltenen Reaktionsprodukts mit einer gesättigten oder ungesättigten aliphatischen Oxiranverbindung.

Die zur Herstellung des erfindungsgemäßen Flammschutzmittels in Schritt i) verwendete Phosphorverbindung entspricht bevorzugt einer Verbindung der folgenden allgemeinen Formel (I): 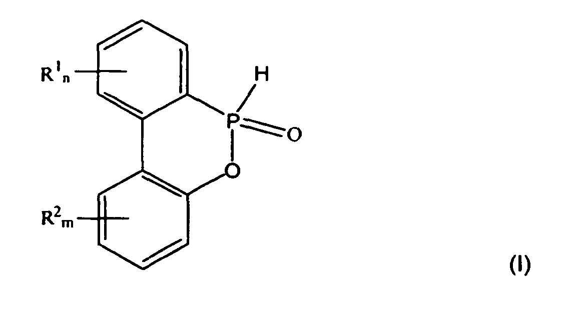 worin R¹ und R² gleich oder verschieden sind und jeweils unabhängig voneinander Alkyl, Alkoxy, Aryl, Aryloxy oder Aralkyl bedeuten, und n und m ganze Zahlen von 0 bis 4 sind. Bevorzugt sind R¹ und R² jeweils C₁₋₈-Alkyl oder C₁₋₈-Alkoxy, und n und m sind 0 oder 1. Ganz besonders bevorzugt ist unsubstituiertes DOPO mit n=0 und m=0.

Bevorzugte ungesättigte Dicarbonsäuren zur Umsetzung mit DOPO und kernsubstituierten DOPO-Derivaten sind Itaconsäure, Maleinsäure, Fumarsäure, Endomethylentetrahydrophthalsäure, Linolensäure, Citraconsäure, Mesaconsäure, Trimersäuren sowie Tetrahydrophthalsäureanhydrid. Ganz besonders bevorzugt sind Itaconsäure und Maleinsäure.

Bevorzugte ungesättigte Dicarbonsäureanhydride sind Itaconsäureanhydrid und Maleinsäureanhydrid.

Der in Schritt i) eingesetzte mehrwertige Alkohol ist bevorzugt ein aliphatisches Diol wie Monoethylenglykol, Diethylenglykol, Propylenglykol, Butandiol und Neopentylglykol, Ein bevorzugter höherwertiger Alkohol ist Tris-2-hydroxyethylisocyanurat (THEIC).

Gemäß einer bevorzugten Ausführungsform wird in Schritt i) das DOPO mit Itaconsäure und Monoethylenglykol umgesetzt.

Das Molverhältnis der Reaktionskomponenten DOPO, ungesättige Dicarbonsäure und mehrwertiger Alkohol wird so gewählt, dass ein phosphormodifizierter Diester mit endständigen Hydroxylgruppen entsteht, und beträgt vorzugsweise etwa 1:1:2 bis 1:1:2,5, besonders bevorzugt etwa 1:1:2.

Der in Schritt i) erhaltene Diester wird erfindungsgemäß weiter mit einer bifunktionellen Phosphorverbindung unter teilweiser Veresterung der endständigen Hydroxylgruppen umgesetzt. Die bifunktionelle Phosphorverbindung ist bevorzugt aus der aus carboxylgruppenhaltigen Phosphinsäuren sowie deren Anhydride und Carbonsäureester bestehenden Gruppe ausgewählt und entspricht vorzugsweise einer Verbindung der folgenden Formeln II bis IV: 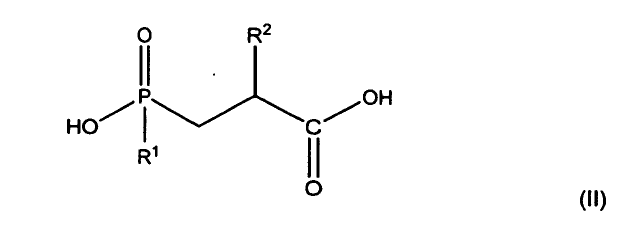 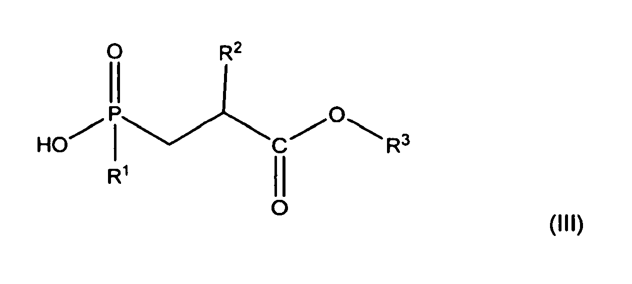 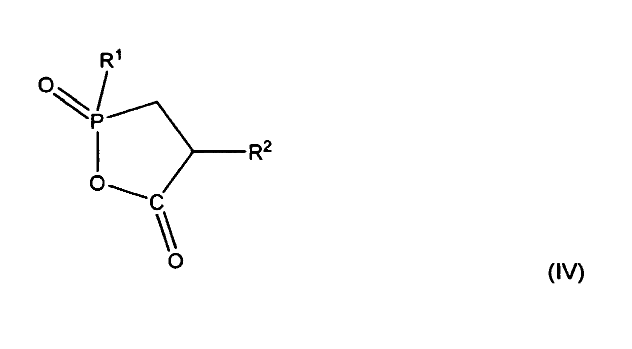 worin R¹ geradkettige oder verzweigte Alkyl-, Cycloalkyl-, Aryl- oder Alkylarylgruppen mit 1 bis 18 C-Atomen, R² Methyl oder H und R³ geradkettige oder verzweigte Alkyl-, Cycloalkyl-, Aryl- oder Alkylarylgruppen mit 1 bis 18 C-Atomen bedeuten.

Bevorzugt bedeuten R¹ und R³ geradkettige oder verzweigte Alkyl-, Cycloalkyl- oder Arylgruppen mit 1 bis 6 C-Atomen.

Besonders bevorzugt ist die bifunktionelle Phosphorverbindung ein Oxaphospholan, und insbesondere ein aus Verbindungen der folgenden Formel (V) ausgewähltes Oxaphospholan: 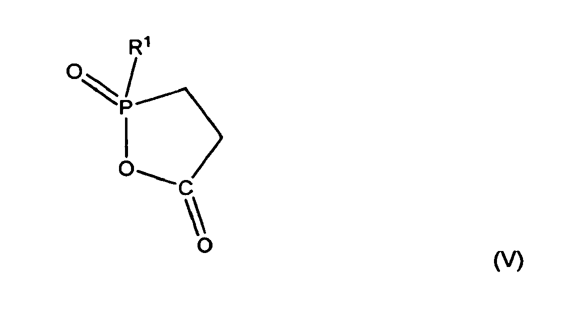 worin R¹ Alkyl oder Aryl, vorzugweise Alkyl mit 1 bis 6 C-Atomen und ganz besonders bevorzugt Methyl, Ethyl oder Phenyl bedeutet.

Ganz besonders bevorzugt ist die bifunktionelle Phosphorverbindung 2-Methyl-2,5-dioxo-1-oxa-2-phospholan oder 2-Phenyl-2,5-dioxo-1-oxa-2-phospholan.

Wegen der geringeren Veresterungsreaktivität der Phosphinsäuregruppen im Vergleich zu Carboxygruppen kann davon ausgegangen werden, daß der Hauptanteil der Phosphinsäuregruppen im Reaktionsprodukt aus Schritt ii) endständig ist.

Als Dicarbonsäurehalbester von Polyalkylenglykolphosphonaten und Polyalkylenglykolphosphaten werden bevorzugt Kondensationsprodukte der unter den Handelsnamen EXOLIT^{™} OP 550 und EXOLIT^{™} OP 560 von der Firma Clariant erhältlichen Phosphorpolyole, die üblicherweise als Gemische mit unterschiedlichen Kettenlängen vorliegen, mit gesättigten und ungesättigten Dicarbonsäuren oder deren Anhydride eingesetzt. Die Herstellung dieser Phosphorpolyole ist auch in der DE 43 42 972 A1 und der DE 199 27 548 C2 beschrieben. Die für die Kondensationsreaktion mit den Phosphorpolyolen geeigneten gesättigten oder ungesättigten Dicarbonsäuren sind bevorzugt aus der aus Maleinsäure, Fumarsäure, Itaconsäure, Mesaconsäure, Citraconsäure, Adipinsäure, Azelainsäure, Sebacinsäure, Phthalsäure, Isophthalsäure, Terephthalsäure und Tetrahydrophthalsäure bestehenden Gruppe ausgewählt.

Bevorzugt entsprechen die in Schritt ii) als bifunktionelle Phosphorverbindung eingesetzten Dicarbonsäurehalbester von Polyalkylenglykolphosphonaten und Polyalkylenglykolphosphaten der folgenden allgemeinen Formel (VI): 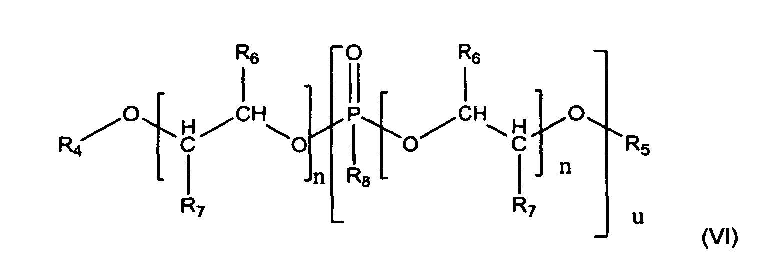 in der
n eine Kettenlänge von 1 bis 4 bedeutet;
u eine durchschnittliche Kettenlänge von 0,5 bis 10 bedeutet;
R₄ und R₅ gleich oder verschieden sind und jeweils einen von einer gesättigten oder ungesättigten Dicarbonsäure abgeleiteten Rest bedeuten;
R₆ und R₇ gleich oder verschieden sind und unabhängig voneinander H oder eine Alkylgruppe mit 1 bis 6 C-Atomen bedeuten;
R₈ eine Alkyl-, Aryl-, Alkylaryl, Alkyloxy- oder Arylalkyloxygruppe mit 1 bis 12 C-Atomen bedeutet oder einen Rest der allgemeinen Formel (VII) bedeutet 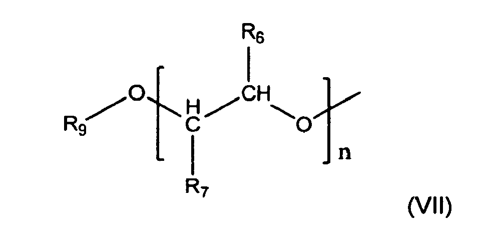
in dem R₆, R₇ und n die oben angegebenen Bedeutungen besitzen und R₉ eine Alkylgruppe mit 1 bis 6 C-Atomen bedeutet.

Erfindungsgemäß können die carboxylgruppenhaltigen Phospinsäurederivate und die die Dicarbonsäurehalbester der Polyalkylenglykolphosphonate und - phosphate auch im Gemisch miteinander eingesetzt werden.

Die Herstellung und Umsetzung des Diesters aus Schritt i) mit der bifunktionellen Phosphorverbindung kann in zwei Stufen erfolgen. Bevorzugt ist jedoch eine einstufige Reaktionsführung, bei der das DOPO bzw. das kernsubstituierte DOPO-Derivat, die ungesättigte Dicarbonsäure, der mehrwertige Alkohol und die bifunktionelle Phosphorverbindung gleichzeitig vorgelegt und miteinander zur Reaktion gebracht werden. Die Verfahrensschritte i) und ii) können somit auch zusammen durchgeführt werden.

Die bifunktionelle Phosphorverbindung in Schritt ii) wird vorzugsweise in einer Menge zugesetzt, die zur Umsetzung von etwa 40 bis 60 Mol-%, vorzugweise 46 bis 54 Mol-%, der Hydroxylgruppen des Diesters aus Schritt i) ausreicht. Als Reaktionsprodukt aus Schritt ii) entsteht also ein phosphorhaltiger Polyester, der sowohl endständige Hydroxylgruppen als auch endständige Phosphinsäuregruppen und/oder endständige Carboxylgruppen enthält.

Die endständigen Hydroxylgruppen des aus Schritt ii) erhaltenen Reaktionsprodukts werden anschließend mit einer weiteren ungesättigten Dicarbonsäure oder einem Dicarbonsäureanhydrid umgesetzt. Das molare Verhältnis der nicht umgesetzten Hydroxylgruppen und der ungesättigten Dicarbonsäure bzw. des Dicarbonsäureanhydrids beträgt vorzugsweise etwa 1:0,4 bis 1:0,6, bevorzugt 1:0,46 bis 1:0,54, besonders bevorzugt etwa 2:1. In diesem Schritt entsteht damit ein phosphorhaltiger Polyester mit endständigen Phosphinsäuregruppen und einer ungesättigten Kohlenstoff-Kohlenstoff-Doppelbindung.

Die in den Schritten i) und iii) eingesetzten ungesättigten Dicarbonsäuren bzw. Dicarbonsäureanhydride können gleich oder verschieden sein. Bevorzugt ist die in Schritt iii) verwendete Dicarbonsäure Maleinsäure oder Itaconsäure. Ganz besonders bevorzugt ist Maleinsäureanhydrid.

Das in Schritt iii) erhaltene Reaktionsprodukt wird anschließend noch mit einer gesättigten oder ungesättigten aliphatischen Oxiranverbindung umgesetzt.

Die aliphatische Oxiranverbindung ist bevorzugt aus der aus Butylenoxid, Allylglycidylether, Butylmonoglycidylether, Butandiol-1, 4-diglycidylether, und 2-Ethylhexylglycidylether bestehenden Gruppe ausgewählt.

Durch die erfindungsgemäße Umsetzung mit der aliphatischen Oxiranverbindung wird die dynamische Viskosität des phosphormodifizierten Polyesters wesentlich herabgesetzt und die Löslichkeit sowohl in industriellen Lösungsmitteln als auch in Reaktivverdünnern und polymerisierbaren Monomeren verbessert. Vorzugsweise liegt die dynamische Viskosität des erfindungsgemäßen Flammschutzmittels bei 80 °C unterhalb von etwa 5000 mPas, besonders bevorzugt zwischen etwa 400 und 2500 mPas. Ferner können durch die Umsetzung mit der aliphatischen Oxiranverbindung weitere funktionelle Gruppen in das Flammschutzmittel eingeführt werden.

Der Phosphorgehalt des erfindungsgemäßen Flammschutzmittels beträgt vorzugsweise zwischen etwa 5 und 12 Gew.-%, besonders bevorzugt zwischen etwa 7 und 10 Gew.-%. Damit ist der Phosphorgehalt ausreichend hoch, um auch durch Zusatz geringer Mengen des Flammschutzmittels zu polymerisierbaren Zusammensetzungen und härtbaren Kunstharzen einen sicheren Flammschutz zu gewährleisten.

Gegenstand der Erfindung ist ferner die Verwendung des oben beschriebenen phosphorhaltigen Flammschutzmittels zur flammhemmenden Ausrüstung von thermoplastischen Formmassen und daraus hergestellten Formkörpern sowie sowie die Verwendung in härtbaren Kunstharzen und daraus hergestellten Formkörpern. Ferner umfasst die Erfindung das phosphorhaltige Flammschutzmittel enthaltende polymerisierbare Zusammensetzungen zur Herstellung thermoplastischer Formmassen sowie härtbare Kunstharze, insbesondere Epoxidharze und ungesättigte Polyesterharze (UP-Harze), und die daraus hergestellten Formmassen und Formkörper, einschließlich Folien, Filme, Fäden, Fasern, Laminaten und Beschichtungen.

Beispiele für polymerisierbare Zusammensetzungen sind insbesondere die zur Herstellung thermoplastischer Formmassen und Formkörper verwendeten Zusammensetzungen mit Monomeren und/oder Comonomeren, die reaktive Doppelbindungen enthalten.

Bevorzugte Monomere und Comonomere sind Methylacrylat, 1,2-Butadien, 1,3-Butadien, 2-Ethylhexylacrylat, Acrylamid, Acrylnitril, Acrylsäure, Ethylacrylat, Ethylmethacrylat, Laurylacrylat und/oder Methylmethacrylat, Methacrylamid, Methacrylnitril, Methacrylsäure, n-Butylacrylat, i-Butylacrylat sec-Butylacrylat n-Butylmethacrylat, i-Butylmethacrylat, n-Hexylacrylat, n-Hexylmethacrylat, n-Propylacrylat, tert-Butylacrylat, tert-Butylmethacrylat, Vinylacetat, Vinylpropionat, Octyl(meth)acrylat, Isooctyl(meth)acrylat, Decyl(meth)acrylat, Dodecyl(meth)acrylat, Itaconsäure, Maleinsäure, Cyanoalkyl(meth)acrylat, substituierte Acrylamide wie N,N'-Dimethylacrylamid, N-Vinylpyrrolidon, N-Vinylcaprolactam, und N-Vinylpiperidin, Tricyclodecyl(meth)acrylat, Isobornyl(meth)acrylate, Hydroxy(meth)acrylat, Diallylphthalat, Styrol, p-Methylstyrol, Vinyltoluol, und alpha-Methylstyrol, sowie Mischungen davon.

Weitere Bespiele für thermoplastische Formkörper und Formmassen sind Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Formkörpern und Formassen um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, EthylenVinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-VinylacetatCopolymere, LLDPE/Ethylen-Acrylsäure-Copolymere und alternierend oder statistisch aufgebaute Polyalkylen/ Kohlenstoffmonoxid-Copolymere und deren Mischungen mit anderen Polymeren wie z.B. Polyamiden.

Die polymerisierbare Zusammensetzung zur Herstellung einer thermoplastischen Formmasse enthält das erfindungsgemäße Flammschutzmittel vorzugsweise in einem Anteil von zwischen etwa 10 bis 40 Gew.-%, bezogen auf die Gesamtmasse der Zusammensetzung ohne Additive. Die olefinisch ungesättigten Monomeren und/oder Comonomeren liegen vorzugsweise in einem Anteil von zwischen etwa 60 Gew.-% bis 90 Gew.-% vor.

Darüber hinaus kann die polymerisierbare Zusammensetzung noch Additive nach dem Stand der Technik enthalten, beispielsweise Weichmacher, Füllstoffe, Hitzestabilisatoren, Schlagzähigkeitsmodifikatoren, Prozesshilfsmittel, Gleitmittel, Lichtschutzmittel, Pigmente, Flammschutzsynergisten und Verstärkungsmittel.

Ein Verfahren zur Herstellung der flammhemmend ausgerüsteten thermoplastischen Formmassen besteht darin, dass das erfindungsgemässe Flammschutzmittel gemeinsam mit weiteren Comonomeren zu flammgeschützten Polymeren umgesetzt oder mit weiteren Comonomeren zu einem Copolymerisat umgesetzt und dann mit Polymeren nach dem Stand der Technik durch Extrudieren, Compoundieren etc. gemischt wird.

Die mit dem erfindungsgemäßen Flammschutzmittel ausgerüsteten Formmassen können dann durch Spritzgiessen und Pressen, Schaumspritzgiessen, Schmelzspinnen, Blasformen, Foliengiessen, Kalandern, Laminieren oder Beschichten zu flammgeschützten Formkörpern, einschließlich Platten, Folien, Filme, Fäden, Fasern, Laminaten und Beschichtungen, weiter verarbeitet werden.

Darüber hinaus kann das erfindungsgemäße phosphorhaltige Flammschutzmittel auch zur flammhemmenden Ausrüstung von härtbaren Kunstharzen, wie ungesättigten Polyesterharzen (UP-Harzen) und Epoxidharzen, und der daraus hergestellten duroplastischen Formkörper verwendet werden.

Gemäß einer bevorzugten Ausführungsform wird das Flammschutzmittel in einer Zusammensetzung mit einem ungesättigten Polyesterharz (UP-Harz) sowie einem Comonomer und gegebenenfalls weiteren Zuschlägen eingesetzt.

Das ungesättigte Polyesterharz ist vorzugsweise ein Polykondensationsprodukt einer gesättigten und/oder ungesättigten Dicarbonsäure und/oder deren Anhydride und eines zwei- oder mehrwertigen Alkohols. Die Dicarbonsäure ist vorzugsweise aus der aus Maleinsäure, Fumarsäure, Itaconsäure, Mesaconsäure, Citraconsäure, Adipinsäure, Azelainsäure, Sebacinsäure, Phthalsäure, Isophthalsäure, Terephthalsäure und Tetrahydrophthalsäure bestehenden Gruppe ausgewählt. Maleinsäure bzw. Maleinsäureanhydrid sind jedoch besonders bevorzugt.

Der zweiwertige Alkohol ist vorzugsweise aus der Gruppe ausgewählt, die aus 1,2-Propandiol, 1,3-Propandiol, 1,3-Butandiol, 1,4-Butandiol, Ethylenglykol, Neopentylglykol, Diethylenglykol, Dipropylenglykol, ethoxyliertem oder propoxyliertem Bisphenol A und Tricyclodecandimethanol besteht. Besonders bevorzugt handelt es sich bei den zweiwertigen Alkoholen um Propylenglykol und Ethylenglykol. Als mehrwertiger Alkohol wird vorzugsweise Tris-2-hydroxyethylisocyanurat (THEIC) verwendet

Das Comonomer in der UP-Harzzusammensetzung ist bevorzugt Styrol oder ein (Meth)acrylat, wie z.B. Methyl(meth)acrylat. Beispiele für weitere Comonomere sind Methylstyrol, Vinyltoluol, Hexandiolacrylat, Triallylcyanurat, Diallylphthalat und mehrwertige Acrylsäureester. Das ungesättigte Polyesterharz wird üblicherweise in einem Anteil von 60 bis 90 Gew.-% in dem Comonomer gelöst. Dieses dient nicht nur als Reaktivverdünner sondern auch zur Copolymerisation des ungesättigten Polyesterharzes und des erfindungsgemäßen Flammschutzmittels, wodurch nach dem Härten dreidimensional vernetzte, feste, unschmelzbare und unlösliche Harze entstehen, in die das Flammschutzmittel fest eingebunden ist.

Als Härter eignen sich insbesondere organische Peroxide, c-c-labile Initiatoren sowie Photoinitiatoren.

Das in die UP-Harzformulierung eingebrachte Flammschutzmittel weist durch die in Schritt iii) eingebrachte ungesättigte Dicarbonsäure noch eine ungesättigte Kohlenstoff-Kohlenstoff-Doppelbindung auf. Diese Doppelbindung kann mit den ungesättigten Gruppen in der UP-Harzzusammensetzung vernetzt werden, so daß ein dreidimensionales Netzwerk mit fest in der Harzmatrix verankertem Flammschutzmittel entsteht.

Die erfindungsgemäße UP-Harzzusammensetzung kann als Zuschlag ferner Glasfasern oder Kunstfasern wie Aramidfasern oder Kohlefasern zur Verstärkung der gehärteten Polyesterharzzusammensetzung enthalten. Zudem kann die erfindungsgemäße Polyesterzusammensetzung gegebenenfalls mit Weichmachern, Füllstoffen oder Pigmenten modifiziert sein.

Die Polyesterharze werden üblicherweise bei Raumtemperatur oder höheren Temperaturen vernetzt. Vorzugsweise ist die Polyesterharzzusammensetzung durch Erwärmen auf eine Temperatur im Bereich von 100 bis 180°C härtbar, wobei der radikalisch initiierte thermische Härtungsprozeß durch ionische und aktinische Härtungskomponenten unterstützt werden kann.

Die erfindungsgemäße UP-Harzzusammensetzung kann insbesondere zur Herstellung flammfest ausgerüsteter, gehärteter Polyester verwendet werden. Diese Polyester weisen dann eine fest mit der Harzmatrix verbundene Phosphorkomponente auf. Der Gesamtphosphorgehalt im ausgehärteten Polyester beträgt vorzugsweise 0,5-5 Gew.-%, und besonders bevorzugt 2,0-3,0 % Gew.-%. Es hat sich herausgestellt, daß schon mit den genannten Phosphoranteilen ein ausreichender Flammschutz bereitgestellt werden kann.

Gemäß einer weiteren Ausführungsform kann das erfindungsgemäße Flammschutzmittel auch zur flammhemmenden Ausrüstung von härtbaren Epoxidharzen verwendet werden.

Das härtbare Epoxidharz ist vorzugsweise aus der Gruppe der Epoxynovolake und Glycidylether von Bisphenolen und aliphatischen Polyolen ausgewählt. Besonders bevorzugt sind Epoxidharze auf der Grundlage des Diglycidylethers von Bisphenol A (DGEBA).

Das Epoxidharz kann darüber hinaus auch die üblicherweise verwendeten Härtungsmittel enthalten, wie beispielsweise Polycarbonsäuren und deren Anhydride, Amine, Polyamine, Polyaminoamide, aminogruppenhaltige Addukte, Guanidine, Cyanguanidine, aliphatische oder aromatische Polyole oder katalytisch wirkende Härtungsmittel. Vorzugsweise ist das Härtungsmittel Dicyandiamid, ein Amin oder ein Aminderivat.

Darüber hinaus können die Epoxidharzformulierungen auch Beschleuniger für die Vernetzungsreaktion mit dem Härter enthalten. Geeignete Beschleuniger sind die im Stand der Technik bekannten Harnstoffderivate, Imidazole und tertiären Amine sowie deren Salze.

Schließlich können die Epoxidharzformulierungen auch die üblichen anorganischen und organischen Füllstoffe, Modifikatoren und Verstärkungsmaterialien enthalten. Bekannte Füllstoffe sind mineralische und faserförmige Füllstoffe wie Quarzmehl, Aluminiumoxyd, Glaspulver, Glimmer, Kaolin, Dolomit, Graphit, Ruß sowie Kohlefasern und Textilfasern. Als Verstärkungsmaterialien eignen sich insbesondere Glasfasern, Kohlenstofffasern und Kunststofffasern. Bekannte Modifikatoren sind Silikone und Kautschuk.

Die Härtung der Epoxidharze erfolgt üblicherweise in einem Temperaturbereich zwischen Raumtemperatur und 200°C unter Bildung eines gehärteten duroplastischen Formkörpers.

Die härtbaren Kunstharze enthalten das erfindungsgemäße Flammschutzmittel vorzugsweise in einem Anteil von zwischen etwa 10 und 40 Gew.-%, bezogen auf die Gesamtmasse der härtbaren Zusammensetzung ohne Additive. Der Anteil des härtbaren Kunstharzes beträgt vorzugsweise zwischen etwa 60 und 90 Gew.-%. Der Gesamtphosphorgehalt der Zusammensetzungen liegt bevorzugt zwischen etwa 1,5 und 3 Gew.-%.

Das flammfest ausgerüstete härtbare Kunstharz kann ohne jede Beschränkung zur Herstellung der üblichen duroplastischen Kunstharz-Formkörper verwendet werden. Sie dient vorzugsweise der Herstellung von Laminaten und Beschichtungen sowie Platten und Bauteilen für den Fahrzeugbau, Luftfahrtbau sowie anderen Gegenständen auf dem Gebiet der Elektronik, bei denen es auf einen wirksamen Flammschutz besonders ankommt, und eignet sich insbesondere für Werkstoffe, die in der Elektroisolationstechnik benötigt werden.

### Ausführungsbeispiele

Die Erfindung wird nachfolgend anhand von Ausführungsbeispielen näher erläutert. Die Messung der dynamischen Viskosität erfolgte in allen Beispielen nach DIN ISO 3219 unter Verwendung eines Viskosimeters vom Typ Haake RS 600.

### Beispiel 1

Zur Herstellung eines phosphormodifizierten Polyesters wurden in einer einstufigen Synthese zunächst 404 g (6,5 mol) Monoethylenglykol, 686 g (3,17 mol) DOPO, 413 g (3,17 mol) Itaconsäure, 425 g (3,17 mol) Methyloxaphospholan portionsweise zusammen gegeben und 4 h lang bei 200 °C verestert. Die Umsetzung kann jedoch auch zweistufig erfolgen, wobei zunächst das DOPO-Addukt an Itaconsäure hergestellt und mit Monoethylenglykol verestert wird, und das glykolisierte DOPO-Addukt anschließend mit der entsprechenden Menge Oxaphospholan umgesetzt wird.

Der Reaktionsansatz wurde abgekühlt und anschließend wurden 156 g (1,59 mol) Maleinsäureanhydrid und 100 ppm Hydrochinon zugesetzt. Unter Vakuum bei 200 mbar und einer Temperatur von 195 °C wurde das Reaktionswasser (145 g) vollständig abdestilliert. Es entstand eine helle feste Masse mit einer Säurezahl von 120 mg KOH/g und einer Viskosität von 85 Pas bei 80 °C. Das Molgewicht betrug 1220 g/mol.

### Beispiel 2

1000 g (0,82 mol) des phosphormodifizierten Polyesters aus Beispiel 1 wurden stufenweise mit 220 g (1,9 mol) Allylglycidylether umgesetzt. Die Umsetzung erfolgte bei 140 °C und dauerte 2 Stunden. Es entstand ein viskose Flüssigkeit mit einer Viskosität von 1500 mPas bei 80 °C und einer Säurezahl von 20 mg KOH/g. Der Phosphorgehalt betrug 8,4 %

### Beispiel 3

1000 g (0,82 mol) des phosphormodifizierten Polyesters aus Beispiel 1 wurden stufenweise mit 230 g (1,76 mol) Butylmonoglycidether umgesetzt. Die Umsetzung erfolgte bei 120 °C und dauerte 2 h. Es entstand eine viskose Flüssigkeit mit einer Viskosität von 800 mPas bei 80 °C und einer Säurezahl von 30 mg KOH/g.

### Beispiel 4

1000 g (0,82 mol) des phosphormodifizierten Polyesters aus Beispiel 1 wurden stufenweise mit 280 g (1,3 mol) Butyldiglycidether umgesetzt. Dabei wird der Polyester in sehr kleinen Portionen zu dem Butyldiglycidether zugegeben. Die Umsetzung erfolgte bei 120 °C und dauerte 2 h. Es entstand eine viskose Flüssigkeit mit einer Viskosität von 2000 mPas bei 80 °C und einer Säurezahl von 25 mg KOH/g.

Das so erhaltene Produkt weist noch freie Oxirangruppen auf und eignet sich deshalb insbesondere zur Verwendung mit härtbaren Epoxidharzen.

### Beispiel 5

1000 g (0,82 mol) des phosphormodifizierten Polyesters aus Beispiel 1 wurden stufenweise mit 310 g (1,66 mol) 2-Ethylhexylglycidether umgesetzt. Die Umsetzung erfolgte bei 125 °C und dauerte 2 h. Es entstand eine Flüssigkeit mit einer Viskosität von 400 mPas bei 80 °C und einer Säurezahl von 25 mg KOH/g.

### Beispiel 6

350 g des phosphorhaltigen und mit einer Oxiranverbindung umgesetzten Polyesters aus Beispiel 2 wurden in 650 g Diallyphthalat gelöst und unter Verwendung des Härters tert. Butylperbenzoat 2 h lang bei 140°C thermisch zu flammgeschütztem Polyallylphthalat mit einem Phosphorgehalt von 2,9 Gew.-% gehärtet. Aus der gehärteten Formmasse wurde ein Prüfkörper nach DIN EN 60695-11-10 gefräst.

Dieser Prüfkörper wurde gemäß dem Underwriter's Laboratories Standard UL 94 V-2 - V-0 (Vertical Burning Test) geprüft. Bei dieser Prüfung werden die vertikal eingespannte Prüfkörper während 10 Sekunden am unteren Ende des Prüfkörpers beflammt. Nach Verlöschen der Flamme wird der Vorgang für weitere 10 Sekunden wiederholt. Dies wird an fünf Prüfkörpern durchgeführt. Die Brenn- und Glühzeiten werden notiert sowie die Summe daraus gebildet. Weiterhin wird festgehalten, ob vom Prüfkörper Tropfen abfallen und sich dabei Watte unterhalb des Prüfkörpers entzündet. Die Einstufungen nach UL 94 V reichen von V-2 bis zur besten Klasse V-0. Für die Einstufung nach V-0 oder V-1 darf die Watte nicht durch glühende oder brennende Tropfen entzündet werden. V-2 erlaubt das Entflammen der Watte.

Die Prüfkriterien sind übersichtlich in der nachfolgenden Tabelle angegeben.

| Prüfkriterium | V-0 | V-1 | V-2 |
|---|---|---|---|
| Brenndauer, 1. Entflammen (1 St.) | ≤ 10 s | ≤ 30s | ≤ 30 s |
| Brenn- u. Glühdauer, 2. Entflammen (1. St.) | ≤ 30 s | ≤ 60 s | ≤ 60 s |
| Gesamtbrenndauer, 1.+2. Entflammen (5 St.) | ≤ 50 s | ≤ 250 s | ≤ 250 s |
| Watte entzündet | Nein | Nein | Ja |

Der gemäß dem Ausführungsbeispiel 6 hergestellte Prüfkörper erzielte das Ergebnis V-0.

### Beispiel 7

300 g des phosphorhaltigen und mit einer Oxiranverbindung umgesetzten Polyesters aus Beispiel 2 wurden mit 700 g eines unmodifizierten, ungesättigten Polyesterharzes mit der Handelsbezeichnung Palatal^{™} P 6-01 (Hersteller DSM Composite Resins AG, Schweiz) vermischt und unter Verwendung des Härters tert.- Butylperbenzoat 2 h lang bei 140 °C thermisch zu einem flammgeschützten Polyesterharz mit einem Phosphorgehalt von 2,5 Gew.-% gehärtet.

Aus der gehärteten Formmasse wurde ein Prüfkörper nach DIN EN 60695-11-10 gefräst und dem unter Beispiel 6 beschriebenen Vertical Burning Test gemäß dem Underwriter's Laboratories Standard UL 94 V-2 - V-0 unterzogen. Der Prüfkörper erzielte das Ergebnis V-0.

## Patentansprüche

1. Phosphorhaltiges Flammschutzmittel, erhältlich durch
i) Umsetzung einer aus 9,10-Dihydro-9-oxa-10-phospha-phenanthren-10-oxid (DOPO) oder kernsubstituierten DOPO-Derivaten ausgewählten Phosphorverbindung mit einer ungesättigten Dicarbonsäure oder deren Anhydrid in Gegenwart eines mehrwertigen Alkohols unter Bildung eines Hydroxylgruppen enthaltenden phosphorhaltigen Diesters;
ii) Weitere Umsetzung wenigstens eines Teils der Hydroxylgruppen mit einer bifunktionellen Phosphorverbindung aus der Gruppe der carboxylgruppenhaltigen Phosphinsäuren, deren Anhydride und Carbonsäureester, der Dicarbonsäurehalbester von Polyalkylenglykolphosphonaten und Polyalkylenglykolphosphaten und deren Mischungen;
iii) Umsetzung der in Schritt ii) nicht umgesetzten Hydroxylgruppen mit einer weiteren ungesättigten Dicarbonsäure oder deren Anhydrid; und
iv) Umsetzung des in Schritt iii) erhaltenen Reaktionsprodukts mit einer gesättigten oder ungesättigten aliphatischen Oxiranverbindung.

2. Flammschutzmittel nach Anspruch 1, **dadurch gekennzeichnet, dass** die Phosphorverbindung in Schritt i) der folgenden allgemeinen Formel (I) entspricht: 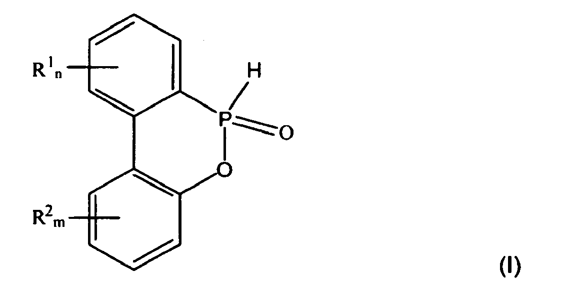 worin R¹ und R² gleich oder verschieden sind und jeweils unabhängig voneinander Alkyl, Alkoxy, Aryl, Aryloxy oder Aralkyl bedeuten, und n und m ganze Zahlen von 0 bis 4 sind.

3. Flammschutzmittel nach Anspruch 1 oder 2, **dadurch gekennzeichnet, dass** die ungesättigte Dicarbonsäure aus der aus Itaconsäure, Maleinsäure, Fumarsäure, Endomethylentetrahydrophthalsäure, Linolensäure, Citraconsäure, Mesaconsäure, Trimersäuren und Tetrahydrophthalsäureanhydrid bestehenden Gruppe ausgewählt ist.

4. Flammschutzmittel nach einem der Ansprüche 1 bis 3, **dadurch gekennzeichnet, das** der mehrwertige Alkohol aus der aus Monoethylenglykol, Diethylenglykol, Propylenglykol, Butandiol, Neopentylglykol und Tris-2-hydroxyethylisocyanurat bestehenden Gruppe ausgewählt ist.

5. Flammschutzmittel nach einem der Ansprüche 1 bis 4, **dadurch gekennzeichnet, dass** die bifunktionelle Phosphorverbindung einer der folgenden allgemeinen Formeln (II), (III) und (IV) entspricht: 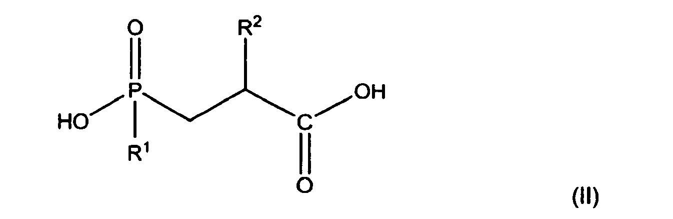 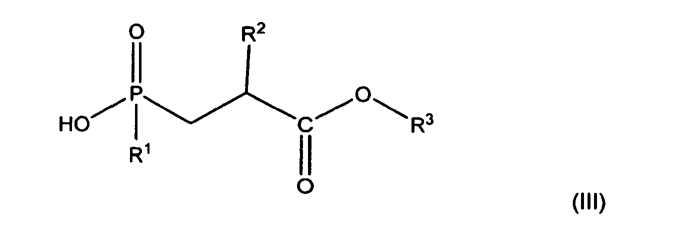 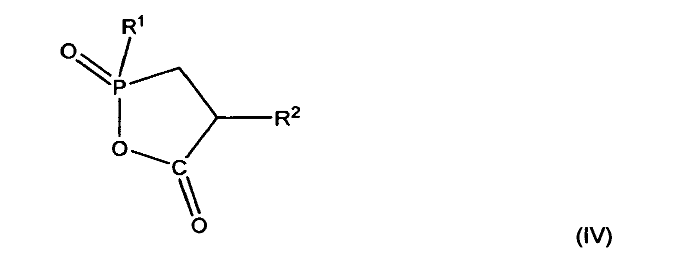 worin R¹ geradkettige oder verzweigte Alkyl-, Cycloalkyl-, Aryl- oder Alkylarylgruppen mit 1 bis 18 C-Atomen, R² Methyl oder H und R³ geradkettige oder verzweigte Alkyl-, Cycloalkyl-, Aryl- oder Alkylarylgruppen mit 1 bis 18 C-Atomen bedeuten.

6. Flammschutzmittel nach einem der Ansprüche 1 bis 5, **dadurch gekennzeichnet, dass** die weitere Dicarbonsäure in Schritt (iii) aus der aus Itaconsäure, Maleinsäure, Fumarsäure, Endomethylentetrahydrophthalsäure, Linolensäure, Citraconsäure, Mesaconsäure, Trimersäuren und Tetrahydrophthalsäureanhydrid bestehenden Gruppe ausgewählt und gleich oder verschieden von der in Schritt (i) eingesetzten Dicarbonsäure in ist.

7. Flammschutzmittel nach einem der Ansprüche 1 bis 6, **dadurch gekennzeichnet, dass** die Oxiranverbindung ein gesättigter oder ungesättigter aliphatischer Glycidylether ist.

8. Flammschutzmittel nach Anspruch 7, **dadurch gekennzeichnet, dass** der Glycidylether aus der aus Butylenoxid, Allylglycidylether, Butylmonoglycidylether, Butandiol-1, 4-diglycidylether, und 2-Ethylhexylglycidylether bestehenden Gruppe ausgewählt ist.

9. Flammschutzmittel nach einem der Ansprüche 1 bis 8, **dadurch gekennzeichnet, dass** das Flammschutzmittel eine dynamische Viskosität bei 80 °C von höchstens 5000 mPas aufweist.

10. Verfahren zur Herstellung eines phosphorhaltigen Flammschutzmittels, welches die folgenden Schritte umfasst:
i) Umsetzung einer aus DOPO oder kernsubstituierten DOPO-Derivaten ausgewählten Phosphorverbindung mit einer ungesättigten Dicarbonsäure oder deren Anhydrid in Gegenwart eines mehrwertigen Alkohols unter Bildung eines Hydroxylgruppen enthaltenden phosphorhaltigen Diesters;
ii) Weitere Umsetzung wenigstens eines Teils der Hydroxylgruppen mit einer bifunktionellen Phosphorverbindung aus der Gruppe der carboxylgruppenhaltigen Phosphinsäuren, deren Anhydride und Carbonsäureester, der Dicarbonsäurehalbester von Polyalkylenglykolphosphonaten und Polyalkylenglykolphosphaten und deren Mischungen;
iii) Umsetzung der in Schritt ii) nicht umgesetzten Hydroxylgruppen mit einer weiteren ungesättigten Dicarbonsäure oder deren Anhydrid; und
iv) Umsetzung des in Schritt iii) erhaltenen Reaktionsprodukts mit einer gesättigten oder ungesättigten aliphatischen Oxiranverbindung.

11. Verfahren nach Anspruch 10, **dadurch gekennzeichnet, dass** in Schritt ii) die Hydroxylgruppen und die bifunktionelle Phosphorverbindung in einem molaren Verhältnis von 1: 0,4 bis 1 : 0,6, vorliegen.

12. Verfahren nach Anspruch 10 oder 11, **dadurch gekennzeichnet, dass** in Schritt iii) die nicht umgesetzten Hydroxylgruppen und die weitere Dicarbonsäure in einem molaren Verhältnis von etwa 1:0,4 bis 1:0,6, vorliegen.

13. Verfahren nach einem der Ansprüche 10 bis 12, **dadurch gekennzeichnet, dass** die Schritte i) und ii) zusammen durchgeführt werden.

14. Verwendung des phosphorhaltigen Flammschutzmittels nach einem der Ansprüche 1 bis 9 zur flammhemmenden Ausrüstung von thermoplastischen Formmassen und daraus hergestellten Formkörpern.

15. Verwendung des phosphorhaltigen Flammschutzmittels nach einem der Ansprüche 1 bis 9 zur flammhemmenden Ausrüstung von härtbaren Kunstharzen und daraus hergestellten Formkörpern.

16. Polymerisierbare Zusammensetzung zur Herstellung einer thermoplastischen Formmasse mit
10 bis 40 Gew.-% des Flammschutzmittels nach einem der Ansprüche 1
60 bis 90 Gew.-% wenigstens eines olefinisch ungesättigten Monomeren.

17. Polymerisierbare Zusammensetzung nach Anspruch 16, ferner enthaltend Weichmacher, Füllstoffe, Additive und Verstärkungsmittel.

18. Thermoplastische Formmasse, erhältlich durch Copolymerisation der Zusammensetzung gemäß einem der Ansprüche 16 oder 17.

19. Härtbare Kunstharzzusammensetzung mit
10 bis 40 Gew.-% des Flammschutzmittels nach Anspruch 1
60 bis 90 Gew.-% wenigstens eines härtbaren Kunstharzes aus der Gruppe der ungesättigten Polyesterharze und Epoxidharze

20. Duroplastischer Formkörper, erhältlich durch Härten der Kunstharzzusammensetzung gemäß Anspruch 19.

## Claims

1. A phosphorus-containing flame retardant obtainable by
i) reaction of a phosphorus compound selected from 9,10-dihydro-9-oxa-10-phospha-phenanthrene-10-oxide (DOPO) or ring-substituted DOPO derivatives with an unsaturated dicarboxylic acid or the anhydride thereof in the presence of a polyvalent alcohol to form a phosphorus-containing diester containing hydroxyl groups;
ii) further reaction of at least part of the hydroxyl groups with a bifunctional phosphorus compound from the group of the carboxyl group-containing phosphinic acids, the anhydrides and carboxylic acid esters thereof, the dicarboxylic acid semiesters of polyalkylene glycol phosphonates and polyalkylene glycol phosphates and mixtures thereof;
iii) reaction of the hydroxyl groups not reacted in step ii) with a further unsaturated dicarboxylic acid or the anhydride thereof; and
iv) reaction of the reaction product obtained in step iii) with a saturated or unsaturated aliphatic oxirane compound.

2. The flame retardant according to claim 1, **characterized in that** the phosphorus compound in step i) corresponds to the following general formula (I): 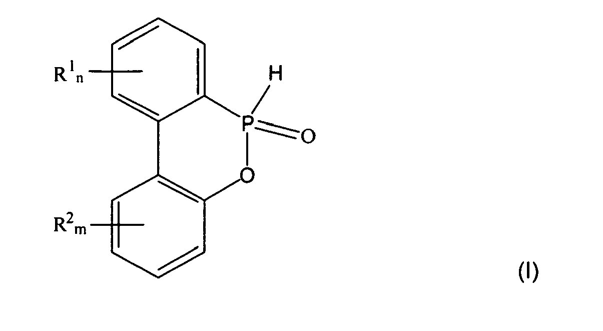 where R¹ and R² are equal or different and denote, each independently from each other, alkyl, alkoxy, aryl, aryloxy or aralkyl, and n and m are integers of from 0 to 4.

3. The flame retardant according to claim 1 or 2, **characterized in that** the unsaturated dicarboxylic acid is selected from the group consisting of itaconic acid, maleic acid, fumaric acid, endomethylene tetrahydrophthalic acid, linolenic acid, citraconic acid, mesaconic acid, trimer acids and tetrahydrophthalic acid anhydride.

4. The flame retardant according to any of claims 1 to 3, **characterized in that** the polyvalent alcohol is selected from the group consisting of monoethylene glycol, diethylene glycol, propylene glycol, butanediol, neopentyl glycol and tris-2-hydroxyethyl isocyanurate.

5. The flame retardant according to any of claims 1 to 4, **characterized in that** the bifunctional phosphorus compound corresponds to one of the following general formulae (II), (III) and (IV): 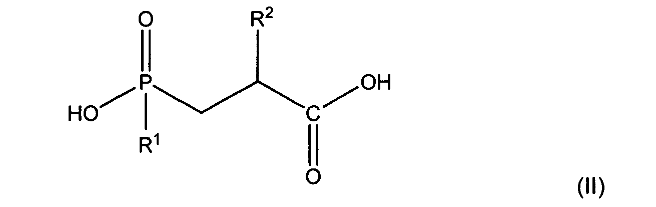 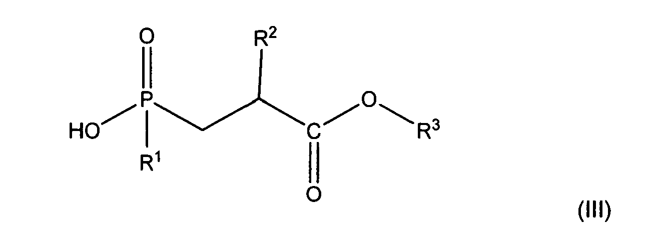 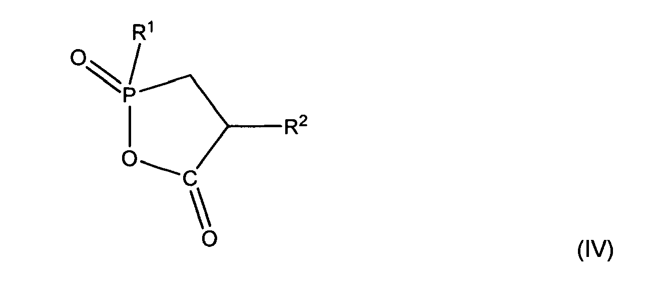 where R¹ denotes straight-chain or branched alkyl, cycloalkyl, aryl or alkylaryl groups with 1 to 18 C atoms, R² denotes methyl or H, and R³ denotes straight-chain or branched alkyl, cycloalkyl, aryl or alkylaryl groups with 1 to 18 C atoms.

6. The flame retardant according to any of claims 1 to 5, **characterized in that** the further dicarboxylic acid in step (iii) is selected from the group consisting of itaconic acid, maleic acid, fumaric acid, endomethylene tetrahydrophthalic acid, linolenic acid, citraconic acid, mesaconic acid, trimer acids and tetrahydrophthalic acid anhydride and is the same as or different from the dicarboxylic acid used in step (i).

7. The flame retardant according to any of claims 1 to 6, **characterized in that** the oxirane compound is a saturated or unsaturated aliphatic glycidyl ether.

8. The flame retardant according to claim 7, **characterized in that** the glycidyl ether is selected from the group consisting of butylene oxide, allyl glycidyl ether, butyl monoglycidyl ether, butanediol-1, 4-diglycidyl ether, and 2-ethylhexyl glycidyl ether.

9. The flame retardant according to any of claims 1 to 8, **characterized in that** the flame retardant has a dynamic viscosity at 80°C of a maximum of 5000 mPas.

10. A method of manufacturing a phosphorus-containing flame retardant, comprising the following steps:
i) reaction of a phosphorus compound selected from DOPO or ring-substituted DOPO derivatives with an unsaturated dicarboxylic acid or the anhydride thereof in the presence of a polyvalent alcohol to form a phosphorus-containing diester containing hydroxyl groups;
ii) further reaction of at least part of the hydroxyl groups with a bifunctional phosphorus compound from the group of the carboxyl group-containing phosphinic acids, the anhydrides and carboxylic acid esters thereof, the dicarboxylic acid semiesters of polyalkylene glycol phosphonates and polyalkylene glycol phosphates and mixtures thereof;
iii) reaction of the hydroxyl groups not reacted in step ii) with a further unsaturated dicarboxylic acid or the anhydride thereof; and
iv) reaction of the reaction product obtained in step iii) with a saturated or unsaturated aliphatic oxirane compound.

11. The method according to claim 10, **characterized in that** in step ii), the hydroxyl groups and the bifunctional phosphorus compound are present in a molar ratio of from 1 : 0.4 to 1 : 0.6.

12. The method according to claim 10 or 11, **characterized in that** in step iii), the unreacted hydroxyl groups and the further dicarboxylic acid are present in a molar ratio of from approx. 1 : 0.4 to 1 : 0.6.

13. The method according to any of claims 10 to 12, **characterized in that** the steps i) and ii) are carried out together.

14. Use of the phosphorus-containing flame retardant according to any of claims 1 to 9 for a flame-retardant finish of thermoplastic molding compounds and molded bodies manufactured therefrom.

15. Use of the phosphorus-containing flame retardant according to any of claims 1 to 9 for a flame-retardant finish of hardenable synthetic resins and molded bodies manufactured therefrom.

16. A polymerizable composition for manufacturing a thermoplastic molding compound, comprising
10 to 40 wt.-% of the flame retardant according to claim 1;
60 to 90 wt.-% of at least one olefinically unsaturated monomer.

17. The polymerizable composition according to claim 16, further containing plasticizers, fillers, additives and reinforcing agents.

18. A thermoplastic molding compound, obtainable by copolymerization of the composition according to either of claims 16 or 17.

19. A hardenable synthetic resin composition comprising
10 to 40 wt.-% of the flame retardant according to claim 1;
60 to 90 wt.-% of at least one hardenable synthetic resin from the group of the unsaturated polyester resins and epoxy resins.

20. A thermosetting molded body, obtainable by hardening the synthetic resin composition according to claim 19.

## Revendications

1. Agent ignifuge contenant du phosphore, qui peut être obtenu par
i) réaction d'un composé de phosphore choisi parmi 9,10-dihydro-9-oxa-10-phospha-phénanthrène-10-oxyde (DOPO) ou des dérivés de DOPO substitués sur le noyau avec un acide dicarboxylique insaturé ou son anhydride en présence d'un alcool polyvalent de manière à former un diester contenant du phosphore qui contient des groupes hydroxyles ;
ii) autre réaction d'au moins une partie des groupes hydroxyles avec un composé de phosphore bifonctionnel du groupe des acides phosphiniques contenant des groupes carboxyliques, de leurs anhydrides et esters d'acides carboxyliques, des semi-esters de l'acide dicarboxylique de phosphonates de polyalkylène glycol et de phosphates de polyalkylène glycol et de leurs mélanges ;
iii) réaction des groupes hydroxyles, qui n'ont pas réagi dans l'étape ii), avec un autre acide dicarboxylique insaturé ou son anhydride; et
iv) réaction du produit réactionnel obtenu à l'étape iii) avec un composé oxirane aliphatique saturé ou insaturé.

2. Agent ignifuge selon la revendication 1, **caractérisé en ce que** le composé de phosphore de l'étape i) correspond à la formule générale (I) suivante : 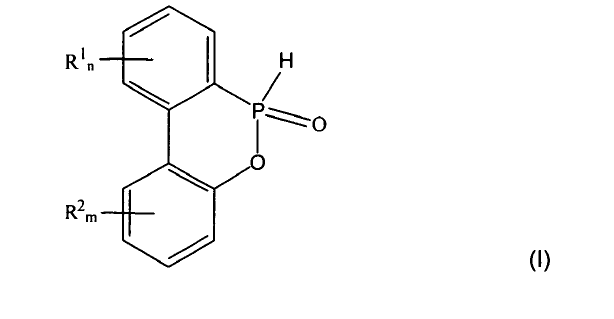 dans laquelle R¹ et R² sont identiques ou différents et représentent chacun, indépendamment l'un de l'autre, de l'alkyle, de l'alcoxyle, de l'aryle, de l'aryloxyle ou de l'aralkyle, et n et m sont des nombres entiers de 0 à 4.

3. Agent ignifuge selon la revendication 1 ou 2, **caractérisé en ce que** l'acide dicarboxylique insaturée est choisi parmi le groupe constitué par l'acide itaconique, l'acide maléique, l'acide fumarique, l'acide endométhylène tétrahydrophtalique, l'acide linoléique, l'acide citraconique, l'acide mésaconique, les acides trimésiques et l'anhydride de l'acide tétrahydrophthalique.

4. Agent ignifuge selon l'une des revendications 1 à 3, **caractérisé en ce que** l'alcool polyvalent est choisi parmi le groupe constitué par le monoéthylène glycol, le diéthylène glycol, le propylène glycol, le butanediol, le néopentyle glycol et le tris-2-hydroxyéthyle isocyanurate.

5. Agent ignifuge selon l'une des revendications 1 à 4, **caractérisé en ce que** le composé de phosphore bifonctionnel correspond à une des formules générales (II), (III) et (IV) suivantes : 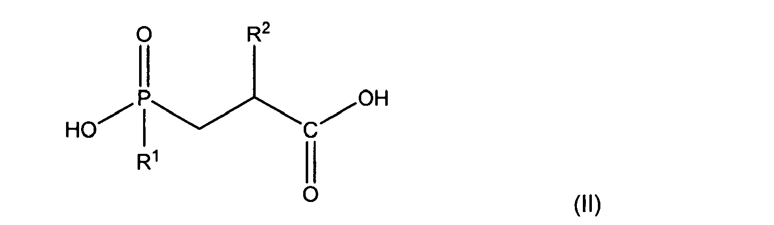 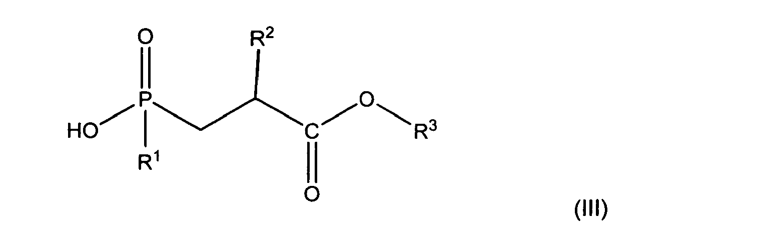 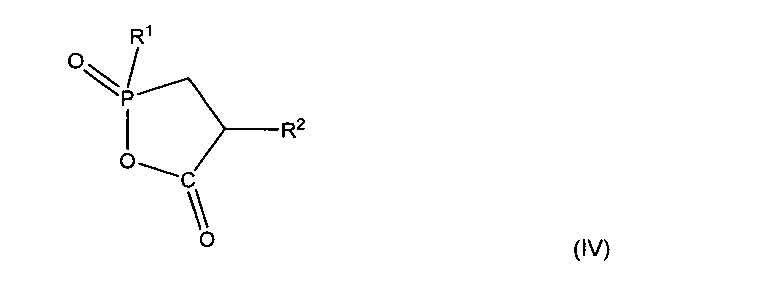 dans lesquelles R¹ représente des groupes à chaîne droite ou ramifiée d'alkyle, de cycloalkyle, d'aryle ou d'alkylaryle avec 1 à 18 atomes de C, R² représente le méthyle ou H et R³ représente des groupes à chaîne droite ou ramifiée d'alkyle, de cycloalkyle, d'aryle ou d'alkylaryle avec 1 à 18 atomes de C.

6. Agent ignifuge selon l'une des revendications 1 à 5, **caractérisé en ce que** l'autre acide carboxylique de l'étape (iii) est choisi parmi le groupe constitué par l'acide itaconique, l'acide maléique, l'acide fumarique, l'acide endométhylène tétrahydrophtalique, l'acide linoléique, l'acide citraconique, l'acide mésaconique, les acides trimésiques et l'anhydride de l'acide tétrahydrophthalique, et est identique ou différent de l'acide dicarboxylique utilisé dans l'étape (i).

7. Agent ignifuge selon l'une des revendications 1 à 6, **caractérisé en ce que** le composé oxirane est un éther glycidique aliphatique saturé ou insaturé.

8. Agent ignifuge selon la revendication 7, **caractérisé en ce que** l'éther glycidique est choisi parmi le groupe constitué par l'oxyde butylénique, l'éther allylglycidique, l'éther monoglycidique de butyle, le butanediol-1,4-diglycidyléther, et le 2-éthylhexyl glycidyléther.

9. Agent ignifuge selon l'une des revendications 1 à 8, **caractérisé en ce que** l'agent ignifuge présente une viscosité dynamique d'au plus 5000 mPas à 80°C.

10. Procédé de fabrication d'un agent ignifuge contenant du phosphore, lequel comprend les étapes suivantes :
i) réaction d'un composé de phosphore choisi parmi DOPO ou des dérivés de DOPO substitués sur le noyau avec un acide dicarboxylique insaturé ou son anhydride en présence d'un alcool polyvalent de manière à former un diester contenant du phosphore qui contient des groupes hydroxyles ;
ii) autre réaction d'au moins une partie des groupes hydroxyles avec un composé de phosphore bifonctionnel du groupe des acides phosphiniques contenant des groupes carboxyliques, de leurs anhydrides et esters d'acides carboxyliques, des semi-esters de l'acide dicarboxylique de phosphonates de polyalkylène glycol et de phosphates de polyalkylène glycol et de leurs mélanges ;
iii) réaction des groupes hydroxyles, qui n'ont pas réagi dans l'étape ii), avec un autre acide dicarboxylique insaturé ou son anhydride; et
iv) réaction du produit réactionnel obtenu à l'étape iii) avec un composé oxirane aliphatique saturé ou insaturé.

11. Procédé selon la revendication 10, **caractérisé en ce que** dans l'étape ii), les groupes hydroxyles et le composé de phosphore bifonctionnel se trouvent dans un rapport molaire de 1 : 0,4 à 1 : 0,6.

12. Procédé selon la revendication 10 ou 11, **caractérisé en ce que** dans l'étape iii), les groupes hydroxyles, qui n'ont pas réagi, et l'autre acide dicarboxylique se trouvent dans un rapport molaire d'approximativement 1 : 0,4 à 1 : 0,6.

13. Procédé selon l'une des revendications 10 à 12, **caractérisé en ce que** les étapes i) et ii) sont mises en oeuvre en commun.

14. Utilisation de l'agent ignifuge contenant du phosphore selon l'une des revendications 1 à 9, destiné à l'équipement ignifuge de matières moulables thermoplastiques et de corps moulés réalisés dans celles-ci.

15. Utilisation de l'agent ignifuge contenant du phosphore selon l'une des revendications 1 à 9, destiné à l'équipement ignifuge de résines synthétiques durcissables et de corps moulés réalisés dans celles-ci.

16. Composition polymérisable pour la fabrication d'un corps moulé thermoplastique, comportant
10 à 40 % en poids de l'agent ignifuge selon la revendication 1,
60 à 90 % en poids d'au moins un monomère oléfiniquement insaturé.

17. Composition polymérisable selon la revendication 16, contenant en outre des plastifiants, des matières de charge, des additifs et des charges renforçantes.

18. Masse moulable thermoplastique qui peut être obtenue par copolymérisation de la composition selon l'une des revendications 16 ou 17.

19. Composition de résine synthétique durcissable, comportant
10 à 40 % en poids de l'agent ignifuge selon la revendication 1,
60 à 90 % en poids d'au moins une résine synthétique durcissable du groupe des résines de polyester insaturées et des résines époxy.

20. Corps moulé qui peut être obtenu par durcissement de la composition de résine synthétique selon la revendication 19.
